(19) Europäisches Patentamt
European Patent Office
Office européen des brevets

(11) EP 1 840 195 B1

(12) **EUROPEAN PATENT SPECIFICATION**

(45) Date of publication and mention of the grant of the patent:
**11.07.2012 Bulletin 2012/28**

(21) Application number: **05809720.5**

(22) Date of filing: **25.11.2005**

(51) Int Cl.:
***C10M 169/06*** *(2006.01)* ***F16D 3/20*** *(2006.01)*
***F16D 3/84*** *(2006.01)* ***C10M 115/08*** *(2006.01)*
***C10M 125/26*** *(2006.01)* ***C10M 135/18*** *(2006.01)*
***C10N 10/02*** *(2006.01)* ***C10N 10/12*** *(2006.01)*
***C10N 30/00*** *(2006.01)* ***C10N 30/06*** *(2006.01)*
***C10N 30/08*** *(2006.01)* ***C10N 40/04*** *(2006.01)*
***C10N 50/10*** *(2006.01)*

(86) International application number:
**PCT/JP2005/021737**

(87) International publication number:
**WO 2006/057368 (01.06.2006 Gazette 2006/22)**

(54) **GREASE COMPOSITION FOR CONSTANT VELOCITY JOINT AND CONSTANT VELOCITY JOINT**

SCHMIERFETTZUSAMMENSETZUNG FÜR DOPPELGELENK UND DOPPELGELENK

COMPOSITION DE GRAISSE POUR JOINT À VITESSE CONSTANTE ET JOINT À VITESSE CONSTANTE

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.11.2004 JP 2004341279**

(43) Date of publication of application:
**03.10.2007 Bulletin 2007/40**

(73) Proprietors:
- **Honda Motor Co., Ltd.**
  **Tokyo 107-8556 (JP)**
- **Nippon Oil Corporation**
  **Tokyo 105-8412 (JP)**

(72) Inventors:
- **Momiyama, Kazuo**
  **c/o Honda Motor Co., Ltd.**
  **Tokyo;1078556 (JP)**
- **Kinoshita, Hirotsugu**
  **c/o Nippon Oil Corporation**
  **Tokyo;1058412 (JP)**
- **Sakamoto, Kiyomi**
  **c/o Nippon Oil Corporation**
  **Yokohama-shi, Kanagawa;2310815 (JP)**

(74) Representative: **Matthews, Derek Peter**
**Dehns**
**St Bride's House**
**10 Salisbury Square**
**London**
**EC4Y 8JD (GB)**

(56) References cited:
**EP-A- 1 314 774**
**JP-A- 02 020 597**
**JP-A- 07 053 785**
**JP-A- 07 286 188**
**JP-A- 10 121 080**
**JP-A- 10 183 162**
**JP-A- 2001 159 428**
**JP-A- 2003 165 988**
**JP-A- 2004 524 415**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a grease composition for a constant velocity universal joint prepared by adding predetermined components to a base oil, and to a constant velocity universal joint in which the composition is enclosed inside a boot thereof.

### BACKGROUND ART

An automobile runs as a result of a rotary driving force, which is generated by various types of engines, such as internal combustion engines and motors, wherein the rotary driving force is transmitted from the differential gear to the hubs via a plurality of transmission shafts such as half shafts and spline shafts, and thus the tires are rotated.

The differential gear is connected to the spline shaft via a so-called inboard side constant velocity universal joint. On the other hand, the spline shaft is connected to the hub via a so-called outboard side constant velocity universal joint. In general, the inboard side constant velocity universal joint functions to mitigate both angular displacements and displacements in the axial direction of the spline shaft. The outboard side constant velocity universal joint plays a role so as to mitigate angular displacement of the spline shaft. Accordingly, transmission of the driving force is quickly performed whenever a change in the traveling direction, i.e., an angular change, is caused. Further, upward and downward movements of the suspension are absorbed. A sliding movement type of constant velocity universal joint, which is capable of making displacements in the axial direction of the spline shaft, is typically used as an inboard side constant velocity universal joint.

In recent years, various types of inboard side constant velocity universal joints, which are adapted to make displacements in the axial direction of the spline shaft more quickly, are being progressively investigated and developed. When such an inboard side constant velocity universal joint is used, the inboard side constant velocity universal joint does not suffer greatly as a result of radiated heat from the engine, because the inboard side constant velocity universal joint is relatively separated from the engine. For this reason, it has been attempted to cover the connecting portion between the inboard side constant velocity universal joint and the spline shaft with a boot, which is made of a resin that hitherto has not been successively used due to fears of insufficient heat resistance.

Conventionally, chloroprene rubber (CR) or chlorinated polyethylene rubber has been adopted as the material for such a boot, wherein a grease is enclosed inside the boot. As described in Patent Document 1 and Patent Document 2, a grease has been widely used, which is obtained by blending additives, such as molybdenum disulphide, a sulfur-based extreme pressure agent, and a phosphorus-based extreme pressure agent, to a base grease composed of a lubricant base oil, a lithium soap, and a urea-based thickener.

Patent Document 1: Japanese Laid-Open Patent Publication No. 4-304300;
Patent Document 2: Japanese Laid-Open Patent Publication No. 6-184583.

### DISCLOSURE OF THE INVENTION

The boot of an inboard side constant velocity universal joint composed of CR or CM deteriorates earlier, as compared with the boot of an outboard side constant velocity universal joint that also is composed of CR or CM. That is, the tensile strength and tensile elongation thereof tend to decrease within a relatively short period of time. The reason thereof is postulated as follows. Specifically, as disclosed above, an inboard side constant velocity universal joint is arranged at a position disposed more closely to the engine as compared with an outboard side constant velocity universal joint. Therefore, the inboard side constant velocity universal joint is more apt to experience the heat that is radiated from the engine, as compared with an outboard side constant velocity universal joint.

In recent years, it has sincerely been desired that the constitutive parts of an automobile should be recycled, in consideration of environmental protection. However, CR and CM have the inconvenience that they are difficult to recycle.

In order to solve the inconvenience described above, it has been suggested that the resin-made boot of the inboard side constant velocity universal joint should be constructed from a polyester-based thermoplastic elastomer (TPC). However, when such a resin-made boot is installed on an automobile and subjected to a heat resistance test, it has been revealed that the heat resistance thereof is inferior to the ability that should be expected owing to the various physical properties of TPC.

When the resin boot becomes deteriorated, then cracks appear in the resin boot, and grease sometimes leaks from such cracks. If this situation arises, for example, it is impossible to ensure satisfactory lubrication performance when the inner member of the inboard side constant velocity universal joint undergoes sliding movement. As a result,

there is a fear of seizure of such sliding portions.

While repeating various investigations into the causes of the fact that the heat resistance of resin boots composed of TPC is lower than expected, the present inventors have postulated that the cause of such low heat resistance of resin boots composed of TPC results from poor compatibility with the grease that is enclosed inside of the boot. From this standpoint, the following knowledge has been obtained by repeating such heat resistance tests while variously changing the greases used. That is, the heat resistance of a boot made of TPC is lowered, especially when sulfur-based extreme pressure agents, composed of oil-soluble sulfur compounds, are added.

The reason thereof is postulated as follows. That is, when an oil-soluble sulfur-based extreme pressure agent is added, sulfur radicals are generated due to the occurrence of thermal decomposition of the sulfur-based extreme pressure agent at high temperatures. Such sulfur radicals attack the carboxyl bonds (C=O) of TPC, and thus the ester group of TPC becomes broken.

From this viewpoint, the present inventors have diligently conducted further investigations concerning preparation of greases with components that do not generate radicals that attack TPC, and which make it possible to ensure satisfactory lubrication performance of the sliding contact portions of the constant velocity universal joint, thus culminating in the subject matter of the present invention.

A principal object of the present invention is to provide a grease composition for a constant velocity universal joint, which is enclosed inside of a joint boot made of TPC.

Another object of the present invention is to provide a grease composition for a constant velocity universal joint, which makes it possible to use a joint boot composed of TPC over a prolonged period of time.

Still another object of the present invention is to provide a constant velocity universal joint provided with a resin boot, which is composed of TPC, and which is excellent in heat resistance.

Still another object of the present invention is to provide a constant velocity universal joint, which makes it possible to ensure satisfactory lubrication performance of the sliding movement portions over a prolonged period of time.

According to one aspect of the present invention, there is provided a grease composition for a constant velocity universal joint, which is enclosed inside of a joint boot composed of a polyester-based thermoplastic elastomer resin, the grease composition containing:

a liquid component including a base oil, a urea-based compound thickener, a solid molybdenum dithiocarbamate, and an alkali metal borate hydrate,
wherein a ratio of the alkali metal borate hydrate with respect to a total amount of the grease composition in the constant velocity universal joint is 0.1 to 10 % by mass, and
wherein a content of sulfur contained in the liquid component is not more than 0.6 % by mass with respect to a total amount of the liquid component.

In the present invention, the term "solid molybdenum dithiocarbamate" refers to the molybdenum dithiocarbamate contained in a solid component, when the grease composition of the constant velocity universal joint is separated into a liquid component and a solid component by a process described hereinafter. The term "polyester-based thermoplastic elastomer" refers to the multiblock copolymer, which contains polyester as a hard segment in the molecule, and which contains, as a soft segment, polyether or a polyester having a low glass transition temperature, as compared with the polyester.

When the material of the boot is composed of TPC as described above, heat resistance of the boot is ensured over a prolonged period of time, by using a material containing the components described above as the grease. Therefore, the occurrence of breakage, cracks or the like, which would otherwise be caused by deterioration due to changes over time or the like, can be suppressed. Therefore, it is possible to avoid leakage of the grease that is enclosed inside of the boot. Therefore, satisfactory lubrication performance of the sliding contact portions of the constant velocity universal joint can be ensured. Therefore, it is possible to avoid the occurrence of seizure of the sliding contact portions.

Further, in the present invention, it is unnecessary to specially blend a sulfur-based extreme pressure agent, composed of an oil-soluble sulfur compound. Therefore, it is possible to avoid attack on the joint boot by sulfur radicals, which are generated from the source of the oil-soluble sulfur-based extreme pressure agent.

The grease composition of the constant velocity universal joint satisfies the following expression (1).

$$A - (S \times B)/C \leq 0.05 \qquad \ldots(1)$$

In expression (1), A represents a sulfur content ratio of the liquid component, S represents a sulfur content ratio of the base oil, B represents a base oil content ratio with respect to the total amount of the grease composition in the constant velocity universal joint, and C represents a content amount of the liquid component with respect to the total

amount of the grease composition in the constant velocity universal joint, wherein the units of A, S, B and C are % by mass.

When the content ratio of sulfur is defined as described above, it is possible to avoid early deterioration, which otherwise would be caused by an attack on the joint boot by sulfur radicals, even when a sulfur-based extreme pressure agent, or a mineral oil containing sulfur, is used.

According to another aspect of the present invention, a constant velocity universal joint is provided, comprising:

an outer member having one end thereof connected to a first transmission shaft, and an open cylindrical section disposed at the other end, and wherein a plurality of guide grooves separated from each other by predetermined distances are provided in the cylindrical section, extending from the one end to the other end thereof;
an inner member having, at one end thereof, sliding contact sections that make sliding contact with the guide grooves of the cylindrical section of the outer member, and having the other end thereof connected to a second transmission shaft; and
a boot having respective ends thereof fixed to the outer member and to the second transmission shaft respectively, while covering the outer member and the second transmission shaft,
wherein the joint boot is composed of a polyester-based thermoplastic elastomer, and
wherein a grease composition of the constant velocity universal joint, which is enclosed inside of the boot, contains a liquid component including a base oil, a urea-based compound thickener, a solid molybdenum dithiocarbamate, and an alkali metal borate hydrate,
wherein a ratio of the alkali metal borate hydrate with respect to a total amount of the grease composition in the constant velocity universal joint is 0.1 to 10 % by mass, and
wherein a content of sulfur contained in the liquid component is not more than 0.6 % by mass with respect to a total amount of the liquid component.

That is, in the case of the present constant velocity universal joint, in which the material for the joint boot thereof is TPC, within the grease composition for the constant velocity universal joint that is enclosed inside of the joint boot, the component thereof that deteriorates TPC, i.e., the sulfur contained in the liquid component, has a content ratio of not more than a predetermined value. Therefore, deterioration of the joint boot is suppressed over a prolonged period of time. Therefore, leakage of grease from the joint boot can be avoided. Accordingly, satisfactory lubrication performance of the sliding contact portions of the constant velocity universal joint can be ensured, and it is possible to avoid the occurrence of seizure of the sliding contact portions.

The grease composition in the constant velocity universal joint satisfies the following expression (1). Specifically, it is preferable to satisfy the expression:

$$A - (S \times B)/C \leq 0.05 \qquad \ldots(1)$$

wherein A represents a sulfur content ratio of the liquid component, S represents a sulfur content ratio of the base oil, B represents a base oil content ratio with respect to the total amount of the grease composition in the constant velocity universal joint, and C represents a content amount of the liquid component with respect to the total amount of the grease composition in the constant velocity universal joint. In expression (1), the units of A, S, B, and C are % by mass.

The constant velocity universal joint constructed as described above generally is a sliding movement type of constant velocity universal joint (for example, a tripod type constant velocity universal joint), which is arranged on the differential gear side of the automobile. In other words, the constant velocity universal joint is preferably used as an inboard side constant velocity universal joint.

In the present invention, the extreme pressure agent is not an essential component. However, the extreme pressure agent may be blended in order to improve the lubricating ability of the grease composition in the constant velocity universal joint. In this case, it is also permissible to use a sulfur-based extreme pressure agent, provided that the content of sulfur contained within the liquid component is not more than 0.6 % by mass with respect to the total amount of the liquid component.

BRIEF DESCRIPTION OF THE DRAWINGS

FIG. 1 is a schematic view illustrating a driving force-transmitting mechanism, constructed by assembling a constant velocity universal joint according to an embodiment of the present invention;
FIG. 2 is a perspective view illustrating main parts of the constant velocity universal joint according to the embodiment

of the present invention;

FIG. 3 is, in partial cutaway, a side view illustrating the constant velocity universal joint shown in FIG. 2;

FIG. 4 is a schematic sectional view illustrating main parts and depicting a state in which a boot is detached from the constant velocity universal joint shown in FIG. 2;

FIG. 5 is a magnified front view illustrating main parts of the constant velocity universal joint shown in FIG. 2;

FIG. 6 is a table illustrating the frictional coefficients of various grease compositions, in which ratios or the like of the components thereof differ, bench test results, and durability of the joint boot; and

FIG. 7 is a table illustrating the frictional coefficients of various grease compositions, in which ratios or the like of the components thereof differ, bench test results, and durability of the joint boot.

BEST MODE FOR CARRYING OUT THE INVENTION

The grease composition for the constant velocity universal joint according to the present invention (hereinafter simply referred to as a "grease composition") shall be explained in detail below with reference to the accompanying drawings, exemplified by preferred embodiments in relation to a constant velocity universal joint provided with a joint boot having the grease composition enclosed therein.

First, FIG. 1 shows a driving force-transmitting mechanism in which tripod type constant velocity universal joints (sliding movement type constant velocity universal joints), making up the constant velocity universal joints according to the present embodiment, are assembled so as to transmit a driving force from an engine to the vehicle tires. In the driving force-transmitting mechanism 1, a half shaft 3, and spline shafts 4a, 4b are connected in this order from a differential gear 2. The spline shafts 4a, 4b are connected to hubs, which are externally fitted with wheels (neither of these components is shown) thereon.

In this arrangement, the half shaft 3 or a rotary shaft 5 of the differential gear 2 is connected to each of the spline shafts 4a, 4b via the tripod type constant velocity universal joints 10a, 10b. On the other hand, the spline shafts 4a, 4b are connected, via Birfield type constant velocity universal joints 12a, 12b, to the hubs. Accordingly, a rotary driving force from the engine is transmitted to the tires (not shown) via the differential gear 2, the tripod type constant velocity universal joints 10a, 10b, the half shaft 3 or the rotary shaft 5, the spline shafts 4a, 4b, the Birfield type constant velocity universal joints 12a, 12b, and the hubs.

In particular, FIG. 2 shows a schematic perspective view illustrating main parts of the tripod type constant velocity universal joint 10a, while FIG. 3 shows, in partial cutaway, a side view thereof. The tripod type constant velocity universal joint 10a includes an outer member 20, an inner member 22 inserted inside the outer member 20 (see FIG. 3), and a bellows-shaped joint boot 24. The grease composition 26 is enclosed inside of the joint boot 24 (see FIG. 3).

The outer member 20 has an elongate shaft section 28, and a cylindrical section 30 provided at the forward end of the shaft section 28. As shown in FIGS. 4 and 5, three guide grooves 32a to 32c, which extend in the axial direction of the outer member 20 and are separated from each other by 120° angles, are formed along the inner wall surface of the cylindrical section 30. Each of the guide grooves 32a to 32c is composed of a ceiling section 34, which extends along the outer circumferential surface of the cylindrical section 30, and rolling surfaces 36 that serve as sliding movement portions, which are opposed to one another in a substantially perpendicular direction from the ceiling section 34.

On the other hand, the inner member 22, which is connected to the forward end of the spline shaft 4a that forms the second transmission shaft, is inserted into an internal hollow space of the cylindrical section 30 (see FIGS. 3 and 4). As shown in FIG. 5, the inner member 22 has three expanded trunnions 38a to 38c, which are directed respectively toward the guide grooves 32a to 32c and are separated from each other by 120° angles.

Cylindrical holders 40 are externally fitted onto side wall portions of,each of the trunnions 38a to 38c. The inner circumferential surface of each of the holders 40 is formed to be linear. On the other hand, side wall portions of the trunnions 38a to 38c are curved (see FIG. 5). Therefore, the trunnions 38a to 38c are slidable in the direction of the arrow A, as shown in FIG. 5, i.e., in the axial direction of the holders 40, and further the trunnions 38a to 38c are tiltable by predetermined angles in the direction of the arrow B with respect to the holders 40. Further, the trunnions 38a to 38c also are rotatable in the direction of the arrow C.

An upper end of the holder 40 protrudes toward the ceiling section 34, as compared with the smooth forward end surface of the trunnion 38a to 38c, which is positioned such that a slight clearance is provided with respect to the ceiling section 34.

Rollers 44 are externally fitted onto the outer circumferential portions of each of the holders 40 through a plurality of needle bearings 42. Curved side wall portions of the rollers 44 make sliding contact with the rolling surfaces 36 of the guide grooves 32a to 32c. Accordingly, as shown in FIG. 4, the rollers 44 make sliding movement along the rolling surfaces 36 in the direction of the arrow X within the cylindrical section 30. As a result, the inner member 22 is displaced relatively with respect to the cylindrical section 30.

As shown in FIGS. 2 and 3, the outer member 20 and the inner member 22, which are constructed as described above, are covered with the joint boot 24. The joint boot 24 composed of TPC includes a bellows section 45, which has

respective concave portions and convex portions, alternately continuing in the longitudinal direction as described above. An opening diameter of one end (hereinafter referred to as a "large diameter side end 46") of the bellows section 45 is complementary to the diameter of the outer member 20. An opening diameter of the other end thereof (hereinafter referred to as a "small diameter side end 48") is complementary to the diameter of the spline shaft 4a.

An annular band installation groove 50a (see FIG. 3), recessed at a predetermined length, is formed on the outer circumference of the large diameter side end 46. A fixing band 52a installed in the band installation groove 50a has a portion on the outer circumferential surface thereof, which is caulked by an unillustrated caulking jig. Accordingly, the fixing band 52a is installed so as to surround the outer circumferential surface of the outer member 20. Specifically, the large diameter side end 46 is positioned and fixed to the outer member 20 by the fixing band 52a.

An annular band installation groove 50b, recessed at a predetermined length in the same manner as the aforementioned band installation groove 50a, is formed on the outer circumference of the small diameter side end 48. A fixing band 52b also is installed in the band installation groove 50b. The fixing band 52b is caulked by an unillustrated caulking jig, such that a portion on the outer circumference thereof is pinched and gripped in right and lefthand directions. As a result, the fixing band 52b is installed on the band installation groove 50b so as to surround the small diameter side end 48, and thus, the small diameter side end 48 is positioned and fixed. In FIGS. 2 and 3, reference numerals 54a, 54b indicate caulked portions, which protrude predetermined lengths radially outwardly, formed by caulking the outer circumferential surfaces of the fixing bands 52a, 52b.

A grease composition 26, which is inserted beforehand into the inside of the boot prior to caulking both of the fixing bands 52a, 52b, is enclosed inside of the boot by caulking, as described above.

In the present embodiment, a grease composition 26 usable herein contains a base oil, a urea-based compound (thickener), a solid molybdenum dithiocarbamate (solid sulfurized molybdenum dialkyldithiocarbamate), and an alkali borate hydrate.

Those selectable as the base oil include ordinarily available lubricating oils, such as mineral oils and synthetic oils. Of course, it is also allowable to use mixtures of two or more of such oils. Examples of mineral oils include those obtained by a lubricating oil production process performed in a petroleum refining plant, i.e., those obtained by refining and by performing one or more treatments including, for example, solvent deasphalting, solvent extraction, hydrocracking, solvent dewaxing, hydrorefining, sulfuric acid cleaning, and clay treatment, with respect to a fraction obtained by performing atmospheric distillation or vacuum distillation on crude petroleum.

The kinematic viscosity of the base oil at 100 °C is preferably 2 to 40 $mm^2$/sec, and more preferably, 3 to 20 $mm^2$/sec. The viscosity index is preferably not less than 90, and more preferably, not less than 100.

A synthetic oil having the characteristics as described above is not specifically limited. However, such a synthetic oil may be exemplified by poly-α-olefin or hydrogenated compounds thereof, diester, polyol ester, alkylnaphthalene, alkylbenzene, polyoxyalkylene glycol, polyphenyl ether, dialkyl diphenyl ether, silicone oil, along with mixtures of two or more of the foregoing.

Among the substances described above, poly-α-olefin or hydrogenated compounds thereof is exemplified, for example, by polybutene, 1-octene oligomer, 1-decene oligomer, and hydrogenated compounds thereof. Diester is exemplified, for example, by ditridecyl glutarate, di(2-ethylhexyl) adipate, diisodecyl adipate, and di(3-ethylhexyl) sebacate. Polyol ester is exemplified, for example, by trimethylol propane caprylate, trimethylol propane pelargonate, pentaerythritol-2-ethyhexanoate, and pentaerythritol pelargonate.

A mineral oil included within the various base oils is especially preferred, since the viscosity thereof falls inside of the numerical range described above. Further, mineral oils are relatively inexpensive and thus advantageous in view of cost, and compatibility thereof is satisfactory with respect to other components, such as the thickener.

Preferred examples of the urea-based compound that serves as the thickener include diurea compounds, triurea compounds, tetraurea compounds, polyurea compounds, urea-urethane compounds, diurethane compounds, along with mixtures of two or more of the aforementioned compounds. In particular, it is preferable to use a diurea compound, an urea-urethane compound, a diurethane compound, or a mixture of two or more of the foregoing, in which the general formula thereof is represented by the following chemical formula (2).

$$D\text{-}CONH\text{-}R^1\text{-}NHCO\text{-}E \qquad (2)$$

In chemical formula (2), $R^1$ represents a divalent organic group. The hydrocarbon group is exemplified, for example, by a linear or branched alkylene group, a linear or branched alkenylene group, a cycloalkylene group, an arylene group, an alkylarene group, and an arylalkylene group. The number of carbon atoms of $R^1$ is preferably 6 to 20, and more preferably 6 to 15.

Specified examples of the foregoing organic group may be exemplified by an ethylene group, a 2,2-dimethyl-4-methylhexylene group, and organic groups represented by the following structural formulas, (3) to (11).

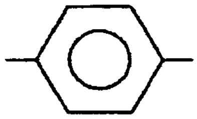

···(3)

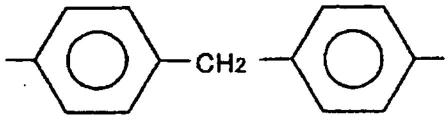

···(4)

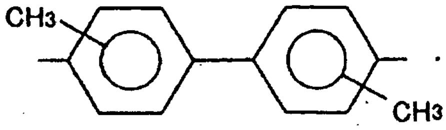

···(5)

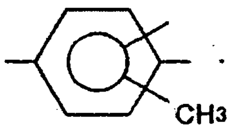

···(6)

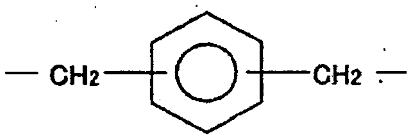

···(7)

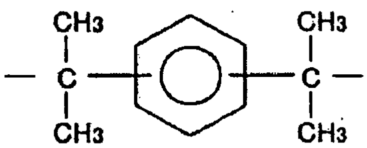

···(8)

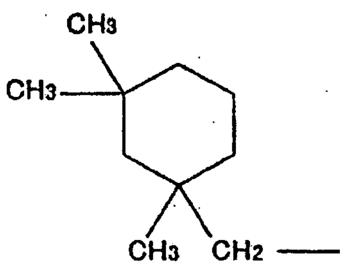

···(9)

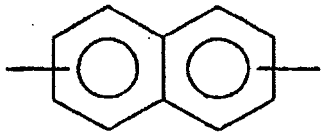

···(10)

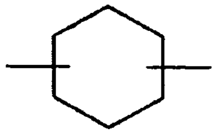

···(11)

In particular, organic groups represented by structural formulas (4) and (6) are especially preferred.

D and E in chemical formula (2) represent any one of - $NHR^2$, $-NR^3R^4$, and $-OR^5$, wherein D and E may be identical to each other or different from each other.

Each of $R^2$, $R^3$, $R^4$, and $R^5$ represents a monovalent organic group, preferably an organic group having a number of carbon atoms from 6 to 20. $R^2$, $R^3$, $R^4$, and $R^5$ may be identical to each other or different from each other.

The aforementioned organic group is exemplified, for example, by a linear or branched alkyl group, a linear or branched alkenyl group, a cycloalkyl group, an alkylcycloalkyl group, an aryl group, an alkylaryl group, and an arylalkyl group. In particular, especially preferred groups are an alkyl group, a cycloalkyl group, an alkylcycloalkyl group, an aryl group, and an alkylaryl group.

Specified examples of linear or branched alkyl groups include, for example, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group. Specified examples of linear or branched alkenyl groups include, for example, a hexenyl group, a heptenyl group, an octenyl group, a nonenyl group, a decenyl group, an undecenyl group, a dodecenyl group, a tridecenyl group, a tetradecenyl group, a pentadecenyl group, a hexadecenyl group, a heptadecenyl group, an octadecenyl group, a nonadecenyl group, and an eicosenyl group.

Specified examples of the cycloalkyl group include, for example, a cyclohexynyl group. Specified examples of the alkylcycloalkyl group include, for example, a methylcyclohexyl group, a dimethylcyclohexyl group, an isopropylcyclohexyl group, a 1-methyl-3-propylhexyl group, a butylcyclohexyl group, an amylcyclohexyl group, an amylmethylcyclohexyl group, a hexylcyclohexyl group, a heptylcyclohexyl group, an octylcyclohexyl group, a nonylcyclohexyl group, a decylcyclohexyl group, an undecylcyclohexyl group, a dodecylcyclohexyl group, a tridecylcyclohexyl group, and a tetradecylcyclohexyl group.

Specified examples of the aryl group include, for example, a phenyl group and a naphthyl group. Specified examples of the alkylaryl group include, for example, a toluyl group, an ethylphenyl group, a xylyl group, a propylphenyl group, a cumenyl group, a methylnaphthyl group, an ethylnaphthyl group, a dimethylnaphthyl group, and a propylnaphthyl group. Specified examples of the arylalkyl group include, for example, a benzyl group, a methylbenzyl group, and an ethylbenzyl group.

The substance represented by the chemical formula (2) can be obtained, for example, by reacting a diisocyanate represented by $OCN-R^1-NCO$ with a compound represented by $R^2NH_2$, $R^3R^4NH$, or $R^5OH$, or a mixture of two or more of such compounds, in the aforementioned base oil, at 10 °C to 200 °C. It goes without saying that $R^1$, $R^2$, $R^3$, $R^4$ or $R^5$ in such raw materials correspond to the groups described above.

It is preferable for the ratio of the urea-based compound to be 2 to 30 % by mass, provided that the grease composition 26 is 100 % by mass. If the ratio is less than 2 % by mass, the fluidity of the grease composition 26 increases excessively, because the added amount of the thickener is small. If the added amount exceeds 30 % by mass, then the hardness of the grease composition 26 increases excessively, and sufficient lubrication performance cannot easily be obtained. More preferably, the ratio of the urea-based compound is 5 to 20 % by mass.

Solid molybdenum dithiocarbamate is a component used to augment the lubrication performance of the grease composition 26. A general formula thereof is represented by the following structural formula (12).

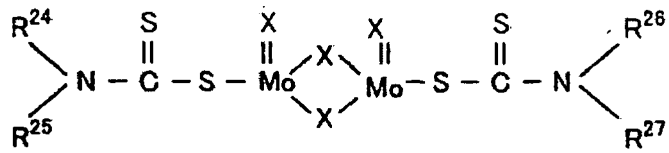

...(12)

In structural formula (12), $R^{24}$, $R^{25}$, $R^{26}$ and $R^{27}$ represent hydrocarbon groups, having a number of carbon atoms of not less than 1, respectively, and which may be identical to each other or different from each other. X represents either O or S.

Specified examples of $R^{24}$, $R^{25}$, $R^{26}$ and $R^{27}$ are exemplified by an alkyl group, a cycloalkyl group, an alkylcycloalkyl group, an aryl group, an alkylaryl group, and an arylalkyl group.

The alkyl group includes, for example, a methyl group, an ethyl group, a propyl group, a butyl group, a pentyl group, a hexyl group, a heptyl group, an octyl group, a nonyl group, a decyl group, a undecyl group, a dodecyl group, a tridecyl group, a tetradecyl group, a pentadecyl group, a hexadecyl group, a heptadecyl group, an octadecyl group, a nonadecyl group, an icosyl group, a henicosyl group, a docosyl group, a tricosyl group, and a tetracosyl group. The cycloalkyl group includes, for example, a cyclopentyl group, an ethylcyclopentyl group, and a cyclohexyl group.

Specified examples of the alkylcycloalkyl group include, for example, a methylcyclopentyl group, an ethylcyclopentyl group, a dimethlycyclopentyl group, a propylcyclopentyl group, a methylethylcyclopentyl group, a trimethylcyclopentyl group, a butylcyclopentyl group, a methylpropylcyclopentyl group, a trimethylcyclopentyl group, a butylcyclepentyl group, a methylpropylcyclopentyl group, a diethylcyclopentyl group, a dimethylethylcyclopentyl group, a methylcyclohexyl group, an ethylcyclohexyl group, a diemthylcyclohexyl group, a propylcyclohexyl group, a methylethylcyclohexyl group, a trimethylcyclohexyl group, a butylcyclohexyl group, a methylpropylcyclohexyl group, a methylcycloheptyl group, an ethylcyclohepyl group, a dimethylcycloheptyl group, a propylcycloheptyl group, a methylethylcycloheptyl group, a trimethylcycloheptyl group, a butylcycloheptyl group, a methylpropylcycloheptyl group, a diethylcycloheptyl group, and a dimethylethylcycloheptyl group. Specified examples of the aryl group include, for example, a phenyl group and a naphthyl group.

Specified examples of the alkylaryl group include, for example, a tolyl group, a xylyl group, an ethylphenyl group, a propylphenyl group, a methylethylphenyl group, a trimethylphenyl group, a butylphenyl group, a methylpropylphenyl group, a diethylphenyl group, a dimethylethylphenyl group, a pentylphenyl group, a hexylphenylgroup, a heptylphenyl group, an octylphenyl group, a nonylphenyl group, a decylphenyl group, an undecylphenyl group, a dodecylphenyl group, a tridecylphenyl group, a tetradecylphenyl group, a pentadecylphenyl group, a hexadecylphenyl group, a heptadecylphenyl group, and an octadecylphenyl group. Specified examples of the arylalkyl group include, for example, a benzyl group, a phenethyl group, a phenylpropyl group, and a phenylbutyl group.

In the organic groups described above, those in which branched isomers and substituted isomers are present are also included within the groups $R^{24}$, $R^{25}$, $R^{26}$ and $R^{27}$.

It is preferable that the ratio of the solid molybdenum dithiocarbamate is 0.1 to 10 % by mass, provided that the grease composition 26 is 100 % by mass. If the ratio is less than 0.1 % by mass, there is tendency for the improvement in wear resistance and galling resistance to be insufficient. Even if the ratio exceeds 10 % by mass, the effect on improving wear resistance and galling resistance becomes substantially saturated, and hence is uneconomical. The ratio of the solid molybdenum dithiocarbamate is, more preferably, 0.5 to 5 % by mass.

Alkali metal borate hydrate is a water-containing composite oxide of an alkali metal and boron. Assuming that M represents the alkali metal, the general formula is represented by $M_2O \cdot xB_2O_3 \cdot yH_2O$ (provided that x = 0.5 to 5.0 and y = 1.0 to 5.0). The alkali metal may include, for example, lithium, sodium, and potassium. In particular, sodium and potassium are preferred.

Such an alkali metal borate hydrate can be obtained in accordance with the method described, for example, in United States Patent Nos. 3,313,727, 3,929,650, and 4,089,790. Alternatively, a dispersion of sodium borate or potassium borate, obtained by using a starting raw material of a neutral calcium sulfonate, may be used. When a carbonation reaction is performed, it is preferable to allow an ashless dispersion, such as succinimide, to coexist within the reaction system.

The average particle size of the alkali metal borate hydrate is preferably not more than 1 $\mu$m. More preferably, the average particle size is not more than 0.5 $\mu$m.

It is preferable for the ratio of the alkali metal borate hydrate to be 0.1 to 10 % by mass, provided that the total amount of the grease composition 26 is 100 % by mass.

If the ratio is less than 0.1 % by mass, there is tendency for the improvement in wear resistance and galling resistance to be insufficient. Even if the ratio exceeds 10 % by mass, the effect on improving wear resistance and galling

resistance becomes substantially saturated, and hence is uneconomical. The ratio of the alkali metal borate hydrate is, more preferably, 1.0 to 5 % by mass.

In the above, the ratio between the liquid component and the solid component is not particularly limited. However, it is preferable for the liquid component to be 75 to 95 % by mass, and the solid component to be 5 to 25 % by mass.

The liquid component and the solid component of the grease composition 26 can be defined by obtaining by the following separating operation. In particular, 5 g of the grease composition 26 is added to 50 g of n-hexane, followed by being agitated. The mixture is subjected to centrifugal separation for approximately 10 minutes, at 30,000 G, using a centrifugal separator. Liquid separated by this operation is transferred into a distinct vessel. On the other hand, 50 g of n-hexane is added to the residue, and centrifugal separation is performed again under the same conditions as described above. Liquid separated by this operation is mixed with the liquid separated previously. On the other hand, 50 g of n-hexane is added to the residue and a third centrifugal separation is performed under the same conditions as described above. The residue obtained by the third centrifugal separation operation is regarded as the solid component.

On the other hand, the liquid component is defined as the component obtained by mixing the liquid separated by the third centrifugal separation operation with the previous liquids, after removing n-hexane from the combined liquid using an evaporator or the like.

For example, an extreme pressure agent, an antioxidant, an oily agent, a rust preventive agent, a viscosity index-improving agent, and a solid lubricant, may be further added to the grease composition 26.

Preferred examples of the extreme pressure agent are exemplified by phosphates and phosphites. Phosphate refers to a compound represented by the following general formula (13), and phosphite refers to a compound represented by the following general formula (14).

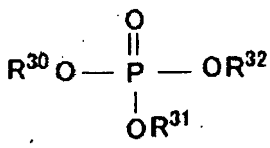

···(13)

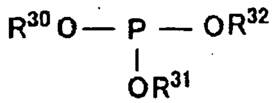

···(14)

In formulas (13) and (14), $R^{30}$ represents, for example, an alkyl group, a cycloalkyl group, an alkylcycloalkyl group, an alkenyl group, an aryl group, an alkylaryl group, or an arylalkyl group, each having a number of carbon atoms of 1 to 24. $R^{31}$ and $R^{32}$ represent, for example, an alkyl group, a cycloalkyl group, an alkylcycloalkyl group, an alkenyl group, an aryl group, an alkylaryl group, or an arylalkyl group, each having a number of carbon atoms of 1 to 24.

Specified examples of $R^{30}$, $R^{31}$, and $R^{34}$, other than hydrogen atoms, may include, for example, a methyl group, an ethyl group, a propyl group, a butyl group, a pentyl group, a hexyl group, a heptyl group, an octyl group, a nonyl group, a decyl group, a dodecyl group, a tetradecyl group, a hexadecyl group, an octadecyl group, an eicosyl group, a docosyl group, a tetracosyl group, a cyclopentyl group, a cyclohexyl group, a methylcyclohexyl group, an ethylcyclohexyl group, a dimethylcyclohexyl group, a cycloheptyl group, a phenyl group, a tolyl group, a xylyl group, an ethylphenyl group, a propylphenyl group, a butylphenyl group, a pentylphenyl group, a hexylphenyl group, a nonylphenyl group, a decylphenyl group, a dodecylphenyl group, a tetradecylphenyl group, a hexadecylphenyl group, an octadecylphenyl group, a benzyl group, and a phenethyl group.

Specified examples of the phosphorus-based additive may include, for example, tributyl phosphate, benzyl diphenyl phosphate, ethyl diphenyl phosphate, octyl diphenyl phosphate, triphenyl phosphate, tricredyl phosphate, tritolyl phosphate, 2-ethylhexyl diphenyl phosphate, tributyl phosphite, and dilauryl phosphate.

When the content of sulfur contained within the liquid component is not more than 0.6 % by mass with respect to the total amount of liquid component, it is allowable to use a sulfur-based additive, such as polysulfide, sulfurized olefin, sulfurized ester, sulfurized mineral oil, a thiazole compound, a thiadiazole compound, a zinc dithiocarbamate compound, and oil-soluble molybdenum dithiocarbamate, along with a sulfur-phosphorus-based extreme pressure agent,

such as thiophosphate ester, a molybdenum dithiophosphate compound, and a zinc dithiophosphate compound.

The antioxidant is exemplified by a phenol compound and an amine compound. Specified examples of the phenol compound include 2,6-di-t-butylphenol and 2,6-di-t-butyl-p-cresol. Specified examples of the amine compound include dialkyldiphenylamine, phenyl-α-naphthylamine, and p-alkylphenyl-α-naphthylamine.

The oily agent is exemplified by any of amines, higher alcohols, higher fatty acids, fatty acid esters, and amides. Specified examples of amines include, for example, laurylamine, myristylamine, palmitylamine, stearylamine, and oleylamine. Specified examples of higher alcohols include, for example, lauryl alcohol, myristyl alcohol, palmityl alcohol, stearyl alcohol, and oleyl alcohol. Specified examples of higher fatty acids include, for example, lauric acid, myristric acid, palmitic acid, stearic acid, and oleic acid. Specified examples of fatty acid esters include, for example, methyl laurate, methyl myristate, methyl palmitate, methyl stearate, and methyl oleate. Specified examples of amides include, for example, lauryl amide, myristyl amide, palmityl amide, stearyl amide, and oleyl amide. Alternatively, other oils and fats may also be used.

The rust preventive agent is exemplified, for example, by metal soaps, polyvalent alcohol partial esters such as sorbitan fatty acid esters, amines, phosphoric acid, and phosphates.

The viscosity index-improving agent is exemplified, for example, by polymethacrylate, polyisobutylene, and polystyrene.

The solid lubricant is exemplified, for example, by boron nitride, graphite fluoride, polytetrafluoroethylene, molybdenum disulfide, and antimony sulfide.

In the grease composition 26, which contains the aforementioned components, the content ratio of sulfur contained in the liquid component is not more than 0.6 % by mass with respect to the total amount of the liquid component. If the sulfur ratio contained in the liquid component exceeds 0.6 % by mass of the liquid component, then the frictional resistance of the grease composition 26 is increased, and hence the endurance period of the joint boot 24 is shortened. More preferably, the sulfur content ratio contained in the liquid component is not more than 0.55 % by mass of the liquid component.

As described above, it is necessary to satisfy the following expression (1).

$$A - (S \times B)/C \leq 0.05 \qquad \ldots(1)$$

In expression (1), A represents a sulfur content ratio of the liquid component, S represents a sulfur content ratio of the base oil, B represents a base oil content ratio with respect to the total amount of the grease composition in the constant velocity universal joint, and C represents a content amount of the liquid component with respect to the total amount of the grease composition in the constant velocity universal joint, wherein the units of A, S, B, and C are % by mass.

The left side of expression (1) represents an amount obtained by subtracting the sulfur compound originating from the base oil (mineral oil or the like) from the sulfur-containing component of the liquid component, or in other words, expression (1) represents the blending ratio of the oil-soluble sulfur-containing additive. As clearly understood from expression (1), it is preferable for the amount of the oil-soluble sulfur-containing compound of this type to be not more than 0.05. Accordingly, not only the total amount of sulfur is decreased, but the amount of the oil-soluble sulfur-containing additive is also decreased. Therefore, it is possible to avoid deterioration of the joint boot within a short period of time.

The structure of the other tripod type constant velocity universal joint 10b is the same as that of the tripod type constant velocity universal joint 10a, and therefore, detailed explanation of the tripod type constant velocity universal joint 10b shall be omitted.

The tripod type constant velocity universal joints 10a, 10b according to the present embodiment are basically constructed as described,above. Next, functions and effects thereof shall be explained.

When the automobile engine is operated, rotational force is transmitted from the differential gear 2 to the inner members 22 via the half shaft 3 and the rotary shaft 5, and via the respective outer members 20, 20 of the tripod type constant velocity universal joints 10a, 10b. Accordingly, each of the spline shafts 4a, 4b is rotated in a predetermined direction.

More specifically, rotational force of the outer member 20 is transmitted via the needle bearings 42 and the rollers 44, which make contact with the guide grooves 32a to 32c. Further, rotational force is transmitted to the trunnions 38a to 38c via the curved side wall surfaces, which make contact with the inner circumferential surface of the holder 40. Accordingly, the spline shafts 4a, 4b are rotated through engagement with the trunnions. Rotational force is further transmitted to the hubs via the Birfield type constant velocity universal joints 12a, 12b. Ultimately, the tires are rotated, resulting in running of the automobile. ,

When the spline shafts 4a, 4b are inclined at predetermined angles with respect to the respective outer members 20, 20 of the tripod type constant velocity universal joints 10a, 10b, the trunnions 38a to 38c are slidably displaced in the direction of the arrow C, while maintaining a state in which side wall surfaces thereof contact the inner circumferential

surface of the holder 40.

The trunnions 38a to 38c are displaced in longitudinal directions of the guide grooves 32a to 32c (i.e., in the direction of arrow X shown in FIGS. 3 and 4) through the rollers 44, which undergo sliding movement along the guide grooves 32a to 32c.

As clearly understood from the above, in the embodiment of the present invention, the tripod type constant velocity universal joints 10a, 10b are used (see FIG. 1) as constant velocity universal joints that are arranged on sides disposed closely to the differential gear 2, i.e., on the inboard side.

The joint boot 24 of each of the tripod type constant velocity universal joints 10a, 10b, functioning as described above, is exposed to high temperatures as a result of frictional heat generated within the tripod type constant velocity universal joints 10a, 10b during sliding movement thereof, and also because the joint boot 24 experiences heat radiated from the differential gear 2 due to being disposed closely to the differential gear 2.

However, in this case, the joint boot 24 is composed of TPC, which is excellent in the heat resistance. Further, the amount of sulfur compound (oil-soluble sulfur compound) contained within the liquid component of the grease composition 26 is minute. Therefore, the amount of sulfur radicals that are generated in the grease composition 26 is very small as well. Therefore, the frequency at which TPC is attacked by sulfur radicals is decreased remarkably. Therefore, deterioration of TPC also is notably suppressed.

That is, according to the embodiment of the present invention, the amount of oil-soluble sulfur compound contained within the liquid component of the grease composition 26 that is enclosed inside the joint boot 24 composed of TPC is controlled, so as to be a very small amount. Accordingly, the heat resistance of the joint boot 24 can be ensured over a longer period of time.

Further, deterioration of the joint boot 24 is avoided over a prolonged period of time. Therefore, the service life of the joint boot 24 is notably lengthened. In other words, for example, cracks or breakage, which otherwise would be caused as a result of changes over time, hardly arise within the joint boot 24. Therefore, it is possible to avoid leakage of the grease composition 26 enclosed inside the joint boot 24. Consequently, it is possible to easily ensure, over a prolonged period of time, lubrication performance of the trunnions 20a to 20c, the rollers 44, and the rolling surfaces 36, which collectively make up the sliding movement portions of the tripod type constant velocity universal joints 10a, 10b. Therefore, it is possible to avoid seizure of the trunnions 38a to 38c, the rollers 44, and the rolling surfaces 36.

The foregoing embodiment has been explained in relation to the case of tripod type constant velocity universal joints 10a, 10b, which are adapted for use as inboard side constant velocity universal joints, by way of example. However, it is also allowable to use the constant velocity universal joint as an outboard side constant velocity universal joint, which is installed with a joint boot 24 made of TPC, and which encloses a grease composition 26 in the joint boot 24 containing the components described above. In this case, the hub serves as a first transmission shaft, whereas the spline shaft 4a, 4b serves as a second transmission shaft.

## EXAMPLES

Grease compositions 26, in which the respective components and ratios thereof were set as shown in FIG. 6, were prepared, and such compositions were enclosed inside of respective joint boots 24, wherein the respective samples were designated as Examples 1 to 4. On the other hand, for the purpose of comparison, grease compositions, in which the respective components and ratios thereof were set as shown in FIG. 7, were also prepared, and such compositions were enclosed inside of respective joint boots 24, wherein these respective samples were designated as Comparative Examples 1 to 6.

In Examples 1 to 4 and Comparative Examples 1 to 6, diphenylmethane-4,4'-diisocyanate was heated and dissolved in the base oils shown in FIGS. 6 and 7, to which various amines and alcohols were added after previously having been heated and dissolved in the base oils. Subsequently, the obtained gel-like substances were blended with various additives, agitated, and passed through a roll mill in order to prepare the grease compositions.

In Comparative Example 6, a 12-hydroxystearic acid lithium salt was used as a thickener. An obtained gel-like substance was blended substantially with various additives and was agitated, followed by passing through a roll mill to prepare the grease composition.

Frictional coefficients were measured for the grease compositions described above, using an SRV friction and wear test apparatus. The measurement conditions were such that the load was 100 N, amplitude was 2 mm, frequency was 30 Hz, temperature was 100 °C, and the time for which testing was conducted was 10 minutes.

A bench test was performed by rotating the tripod type constant velocity universal joint 10a under conditions of 2,000 rotations per minute (rpm), a torque of 300 N·m, and a joint angle of 6°. Thereafter, the condition of the sliding portions included within the tripod type constant velocity universal joint 10a was visually observed. Samples in which seizure and/or galling of the sliding portions was not observed were regarded as acceptable. Samples in which seizure and/or galling of the sliding portions was observed were regarded as unacceptable.

A high temperature durability test was performed on the tripod type constant velocity universal joints 10a, having

enclosed therein the grease compositions of Examples 1 to 4 and Comparative Examples 1 to 6, in order to investigate the degree of deterioration of each of the joint boots 24. Specifically, the tripod type constant velocity universal joint 10a was rotated at 600 rotations per minute (rpm) for 500 hours at a temperature of 130 °C. Results are indicated by a circle when the decrease in physical properties of the joint boot 24 was within 20 %. Results are indicated by a triangle when the decrease was 20 to 50 %. Results are indicated by a cross when the decrease exceeded 50 %. Such results are shown in FIGS. 6 and 7, together with the results of the bench test.

Comparing FIGS. 6 and 7 with each other, it is clear that the durability of the joint boot 24 can be improved, and both seizure resistance and galling resistance can be improved, by controlling the content ratio of the oil-soluble sulfur compound contained within the liquid component.

## Claims

1. A grease composition (26) for a constant velocity universal joint, which is enclosed inside of a joint boot (24), which forms the constant velocity universal joint (10a), composed of a polyester-based thermoplastic elastomer resin, said grease composition (26) comprising:

   a liquid component including a base oil, a thickener of a urea-based compound, a solid molybdenum dithiocarbamate, and an alkali metal borate hydrate,
   wherein a ratio of said alkali metal borate hydrate with respect to a total amount of said grease composition (26) for said constant velocity universal joint is 0.1 to 10 % by mass,
   wherein a content of sulfur contained in said liquid component is not more than 0.6 % by mass with respect to a total amount of said liquid component,
   wherein "solid molybdenum dithiocarbamate" is the molybdenum dithiocarbamate contained in a solid component when the grease composition is separated into a liquid component and a solid component by a procedure in which : 5g of grease composition is added to 50g of n-hexane, followed by agitation ; the mixture is subjected to centrifugal separation for approximately 10 minutes at 30,000 g using a centrifugal separator and liquid separated by this operation is transferred to a distract vessel; 50g of n-hexane is added to the residue and centrifugal separation is performed again under the same conditions, liquid separated by this operation being mixed with the liquid separated by the fist centrifugation ; 50g of n-hexane is added to the residue and a third centrifugal separation is performed under the same conditions, the residue obtained by the third centrifugal separation being the solid component ; and
   wherein the following expression (1) is satisfied:

   $$A - (S \times B)/C \leq 0.05 \qquad \ldots(1)$$

   in which A represents a sulfur content ratio of said liquid component, S represents a sulfur content ratio of said base oil, B represents a base oil content ratio with respect to said total amount of said grease composition (26) in said constant velocity universal joint, and C represents a content amount of said liquid component with respect to said total amount of said grease composition (26) in said constant velocity universal joint, and in which units of A, S, B and C are % by mass.

2. A constant velocity universal joint (10a) comprising:

   an outer member (20) having one end thereof connected to a first transmission shaft (5), an open cylindrical section (30) disposed at the other end, and wherein a plurality of guide grooves (32a to 32c) separated from each other by predetermined distances are provided in said cylindrical section (30), extending from said one end to the other end thereof;
   an inner member (22) having, at one end thereof, sliding contact sections (44) that make sliding contact with said guide grooves (32a to 32c) of said cylindrical section (30) of said outer member (20), and having the other end thereof connected to a second transmission shaft (4a); and
   a joint boot (24) having respective ends thereof fixed to said outer member (20) and to said second transmission shaft (4a) respectively, while covering said outer member (20) and said second transmission shaft (4a),
   wherein said joint boot (24) is composed of a polyester-based thermoplastic elastomer, and
   wherein a grease composition (26) of said constant velocity universal joint, which is enclosed inside of said joint boot (24), contains a liquid component including a base oil, a thickener of a urea-based compound thickener,

a solid molybdenum dithiocarbamate, and an alkali metal borate hydrate,
wherein a ratio of said alkali metal borate hydrate with respect to a total amount of said grease composition (26) in said constant velocity universal joint is 0.1 to 10 % by mass,
wherein a content of sulfur contained in said liquid component is not more than 0.6 % by mass with respect to a total amount of said liquid component,
wherein "solid molybdenum dithiocarbamate" is the molybdenum dithiocarbamate contained in a solid component when the grease composition is separated into a liquid component and a solid component by a procedure in which : 5g of grease composition is added to 50g of n-hexane, followed by agitation ; the mixture is subjected to centrifugal separation for approximately 10 minutes at 30,000 g using a centrifugal separator and liquid separated by this operation is transferred to a distract vessel; 50g of n-hexane is added to the residue and centrifugal separation is performed again under the same conditions, liquid separated by this operation being mixed with the liquid separated by the fist centrifugation ; 50g of n-hexane is added to the residue and a third centrifugal separation is performed under the same conditions, the residue obtained by the third centrifugal separation being the solid component ; and
wherein the following expression (1) is satisfied:

$$A - (S \times B)/C \leq 0.05 \quad \ldots(1)$$

in which A represents a sulfur content ratio of said liquid component, S represents a sulfur content ratio of said base oil, B represents a base oil content ratio with respect to said total amount of said grease composition (26) in said constant velocity universal joint, C represents a content amount of said liquid component with respect to said total amount of said grease composition (26) in said constant velocity universal joint, and in which units of A, S, B, and C are % by mass.

**Patentansprüche**

**1.** Schmierfettzusammensetzung (26) für ein Gleichlaufuniversalgelenk, welches in einer Gelenkschutzmanschette (24) eingeschlossen ist, welches das Gleichlaufuniversalgelenk (10a) bildet, zusammengesetzt aus einem Polyester-basierten thermoplastischen Elastomerharz, wobei die Schmierfettzusammensetzung (26) umfasst:

eine flüssige Komponente, enthaltend ein Basisöl, einen Verdicker von einer Harnstoff-basierten Verbindung, ein festes Molybdändithiocarbamat und ein Alkalimetallborathydrat,
wobei das Verhältnis von dem Alkalimetallborathydrat in Bezug auf die Gesamtmenge von der Schmierfettzusammensetzung (26) für das Gleichlaufuniversalgelenk 0,1 bis 10 Massenprozent ist, wobei ein enthaltener Schwefelgehalt in der flüssigen Komponente nicht mehr als 0,6 Massenprozent in Bezug auf eine Gesamtmenge von der flüssigen Komponente ist, wobei "festes Molybdändithiocarbamat" das enthaltende Molybdändithiocarbamat in einer festen Komponente ist, wenn die Schmierfettzusammensetzung in eine flüssige Komponente und eine feste Komponente getrennt wird durch ein Verfahren in welchem:

5 g Schmierfettzusammensetzung zu 50 g n-Hexan zugegeben werden, gefolgt von Schütteln; die Mischung wird einer Zentrifugaltrennung für etwa 10 Minuten bei 30.000 G unterworfen unter Verwendung eines Fliehkraftabscheiders und die durch diese Handlung abgeschiedene Flüssigkeit wird in ein unterschiedliches Gefäß transferiert; 50 g von n-Hexan werden dem Rest hinzugegeben und zentrifugale Trennung wird wiederum unter den gleichen Bedingungen durchgeführt, die durch diese Handlung abgetrennte Flüssigkeit wird mit der getrennten Flüssigkeit aus der ersten Zentrifugierung gemischt; 50 g von n-Hexan werden zu dem Rest hinzugegeben und eine dritte zentrifugale Trennung wird unter den gleichen Bedingungen durchgeführt, der durch die dritte Zentrifugaltrennung erhaltene Rest ist die feste Komponente; und wobei der folgende Ausdruck (1) erfüllt wird:

$$A - (S \times B)/C \leq 0{,}05 \quad (1)$$

in welchem A ein Schwefelgehaltsverhältnis von der flüssigen Komponente darstellt, S ein Schwefelgehaltsverhältnis von dem Basisöl darstellt, B ein Basisölgehaltsverhältnis in Bezug auf die Gesamtmenge

von der Schmierfettzusammensetzung (26) in dem Gleichlaufuniversalgelenk darstellt, und C eine Gehaltsmenge von der flüssigen Komponente in Bezug auf die Gesamtmenge von der Schmierfettzusammensetzung (26) in dem Gleichlaufuniversalgelenk darstellt, und in welchen die Einheiten von A, S, B und C Massenprozent sind.

**2.** Ein Gleichlaufuniversalgelenk (10a) umfassend:

ein Außenelement (20), welches ein Ende davon verbunden mit einer ersten Übertragungswelle (5) aufweist, einen am anderen Ende angeordneten offenen zylindrischen Abschnitt (30) und wobei in dem zylindrischen Abschnitt (30) eine Vielzahl von voneinander durch vorgegebene Abstände getrennte Führungsnuten (32a bis 32c) bereitgestellt sind, welche sich von dem einen zu dem anderen Ende davon erstrecken;
einem inneren Element (22), welches an einem Ende davon Gleitkontaktabschnitte (44) aufweist, welche einen Gleitkontakt mit den Führungsnuten (32a bis 32c) von dem zylindrischen Abschnitt (30) von dem äußeren Element (20) machen und welches das andere Ende davon, verbunden zu einer zweiten Übertragungswelle (4a) aufweist; und einer Gelenkschutzmanschette (24) welche entsprechende Enden davon, verbunden mit dem äußeren Element (20) bzw. der zweiten Übertragungswelle (4a) aufweist, wobei das äußere Element (20) und die zweite Übertragungswelle (4a) abgedeckt werden, wobei die Gelenkschutzmanschette (24) zusammengesetzt ist aus einem Polyester-basierten thermoplastischen Elastomer und wobei eine Schmierfettzusammensetzung (26) von dem Gleichlaufuniversalgelenk, welches in der Gelenkschutzmanschette (24) enthalten ist, eine flüssige Komponente enthält welches ein Basisöl, einen Verdicker von einem Harnstoff-basierten Verbindungsverdicker, ein festes Molybdändithiocarbamat und ein Alkalimetallborathydrat umfasst,
wobei das Verhältnis von dem Alkalimetallborathydrat in Bezug auf die Gesamtmenge von der Schmierfettzusammensetzung (26) für das Gleichlaufuniversalgelenk 0,1 bis 10 Massenprozent ist, wobei der enthaltende Schwefelgehalt in der flüssigen Komponente nicht mehr als 0,6 Massenprozent in Bezug auf die Gesamtmenge von der flüssigen Komponente ist, wobei "festes Molybdändithiocarbamat" das enthaltende Molybdändithiocarbamat in einer festen Komponente ist, wenn die Schmierfettzusammensetzung in eine flüssige Komponente und eine feste Komponente getrennt wird durch ein Verfahren in welchem:

5 g Schmierfettzusammensetzung zu 50 g n-Hexan zugegeben werden, gefolgt von Schütteln; die Mischung wird einer Zentrifugaltrennung für etwa 10 Minuten bei 30.000 G unterworfen unter Verwendung eines Fliehkraftabscheiders und die durch diese Handlung abgeschiedene Flüssigkeit wird in ein unterschiedliches Gefäß transferiert; 50 g von n-Hexan werden dem Rest hinzugegeben und zentrifugale Trennung wird wiederum unter den gleichen Bedingungen durchgeführt, die durch diese Handlung abgetrennte Flüssigkeit wird mit der getrennten Flüssigkeit aus der ersten Zentrifugierung gemischt; 50 g von n-Hexan werden zu dem Rest hinzugegeben und eine dritte zentrifugale Trennung wird unter den gleichen Bedingungen durchgeführt, der durch die dritte Zentrifugaltrennung erhaltene Rest ist die feste Komponente; und wobei der folgende Ausdruck (1) erfüllt wird:

$$A - (S \times B)/C \leq 0,05 \qquad (1)$$

in welchem A ein Schwefelgehaltsverhältnis von der flüssigen Komponente darstellt, S ein Schwefelgehaltsverhältnis von dem Basisöl darstellt, B ein Basisölgehaltsverhältnis in Bezug auf die Gesamtmenge von der Schmierfettzusammensetzung (26) in dem Gleichlaufuniversalgelenk darstellt, und C eine Gehaltsmenge von der flüssigen Komponente in Bezug auf die Gesamtmenge von der Schmierfettzusammensetzung (26) in dem Gleichlaufuniversalgelenk darstellt, und in welchen die Einheiten von A, S, B und C Massenprozent sind.

## Revendications

**1.** Composition de graisse (26) pour joint de cardan homocinétique, qui est enfermée à l'intérieur d'un soufflet de joint (24), qui forme le joint de cardan homocinétique (10a), composée d'une résine élastomérique thermoplastique à base de poly(ester), ladite composition de graisse (26) comprenant :

un composant liquide comprenant une huile de base, un épaississant d'un composé à base d'urée, un dithiocarbamate de molybdène solide, et un hydrate de borate de métal alcalin,

dans laquelle un rapport dudit hydrate de borate de métal alcalin à une quantité totale de ladite composition de graisse (26) pour ledit joint homocinétique est de 0,1 à 10% en masse,
dans laquelle une teneur en soufre contenue dans ledit composant liquide n'est pas supérieure à 0,6% en masse par rapport à une quantité totale dudit composant liquide,
dans laquelle le « dithiocarbamate de molybdène solide » est le dithiocarbamate de molybdène contenu dans un composant solide lorsque la composition de graisse est séparée en un composant liquide et un composant solide par une procédure dans laquelle : 5 g de la composition de graisse sont ajoutés à 50 g de n-hexane, suivi par une agitation ; le mélange est soumis à une séparation centrifuge pendant approximativement 10 minutes à 30 000 G en utilisant un séparateur centrifuge et le liquide séparé par cette opération est transféré dans une cuve distincte ; 50 g de n-hexane sont ajoutés au résidu et une séparation centrifuge est réalisée à nouveau dans les mêmes conditions, le liquide séparé par cette opération étant mélangé avec le liquide séparé par la première centrifugation ; 50 g de n-hexane sont ajoutés au résidu et une troisième séparation centrifuge est réalisée dans les mêmes conditions, le résidu obtenu par la troisième séparation centrifuge étant le composant solide ; et
dans laquelle l'expression (1) suivante est satisfaite :

$$A - (S \times B)/C \leq 0,05 \quad \dots (1)$$

dans laquelle A représente un rapport de la teneur en soufre dudit composant liquide, S représente un rapport de la teneur en soufre de ladite huile de base, B représente un rapport de la teneur en huile de base par rapport à ladite quantité totale de ladite composition de graisse (26) dans ledit joint de cardan homocinétique, et C représente une quantité de teneur dudit composant liquide par rapport à ladite quantité totale de ladite composition de graisse (26) dans ledit joint de cardan homocinétique, et dans laquelle les unités de A, S, B et C sont en % en masse.

**2.** Joint de cardan homocinétique (10a) comprenant :

un organe externe (20) dont une extrémité est raccordée à un premier arbre de transmission (5), une section cylindrique ouverte (30) disposée à l'autre extrémité, et où une pluralité de rainures de guidage (32a à 32c) séparées les unes des autres de distances prédéterminées est prévue dans ladite section cylindrique (30), s'étendant de ladite une extrémité à l'autre extrémité de celui-ci ;
un organe interne (22) comportant, au niveau d'une extrémité de celui-ci, des sections de contact par glissement (44) qui établissent un contact par glissement avec lesdites rainures de guidage (32a à 32c) de ladite section cylindrique (30) dudit organe externe (20), et dont l'autre extrémité est raccordée à un second arbre de transmission (4a) ; et
un soufflet de joint (24) ayant ses extrémités respectives fixées audit organe externe (20) et audit second arbre de transmission (4a) respectivement, tout en couvrant ledit organe externe (20) et ledit second arbre de transmission (4a),
dans lequel ledit soufflet de joint (24) est composé d'un élastomère thermoplastique à base de poly(ester), et dans lequel une composition de graisse (26) dudit joint de cardan homocinétique, qui est enfermée à l'intérieur dudit soufflet de joint (24), contient un composant liquide comprenant une huile de base, un épaississant d'un composé à base d'urée, un dithiocarbamate de molybdène solide, et un hydrate de borate de métal alcalin,
dans lequel un rapport dudit hydrate de borate de métal alcalin à une quantité totale de ladite composition de graisse (26) dans ledit joint homocinétique est de 0,1 à 10% en masse,
dans lequel une teneur en soufre contenue dans ledit composant liquide n'est pas supérieure à 0,6% en masse par rapport à une quantité totale dudit composant liquide,
dans laquelle le « dithiocarbamate de molybdène solide » est le dithiocarbamate de molybdène contenu dans un composant solide lorsque la composition de graisse est séparée en un composant liquide et un composant solide par une procédure dans laquelle : 5 g de la composition de graisse sont ajoutés à 50 g de n-hexane, suivi par une agitation ; le mélange est soumis à une séparation centrifuge pendant approximativement 10 minutes à 30 000 G en utilisant un séparateur centrifuge et le liquide séparé par cette opération est transféré dans une cuve distincte ; 50 g de n-hexane sont ajoutés au résidu et une séparation centrifuge est réalisée à nouveau dans les mêmes conditions, le liquide séparé par cette opération étant mélangé avec le liquide séparé par la première centrifugation ; 50 g de n-hexane sont ajoutés au résidu et une troisième séparation centrifuge est réalisée dans les mêmes conditions, le résidu obtenu par la troisième séparation centrifuge étant le composant solide ; et

dans laquelle l'expression (1) suivante est satisfaite :

$$A - (S \times B)/C \leq 0{,}05 \quad \ldots (1)$$

dans laquelle A représente un rapport de la teneur en soufre dudit composant liquide, S représente un rapport de la teneur en soufre de ladite huile de base, B représente un rapport de la teneur en huile de base par rapport à ladite quantité totale de ladite composition de graisse (26) dans ledit joint de cardan homocinétique, C représente une quantité de teneur dudit composant liquide par rapport à ladite quantité totale de ladite composition de graisse (26) dans ledit joint de cardan homocinétique, et dans laquelle les unités de A, S, B et C sont en % en masse.

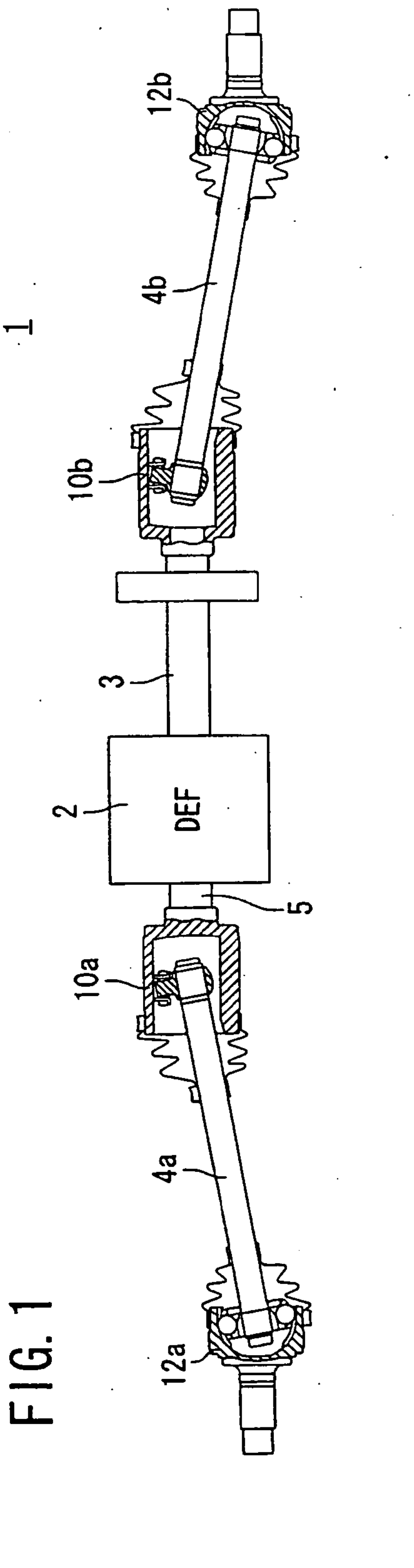


FIG. 1

FIG. 2

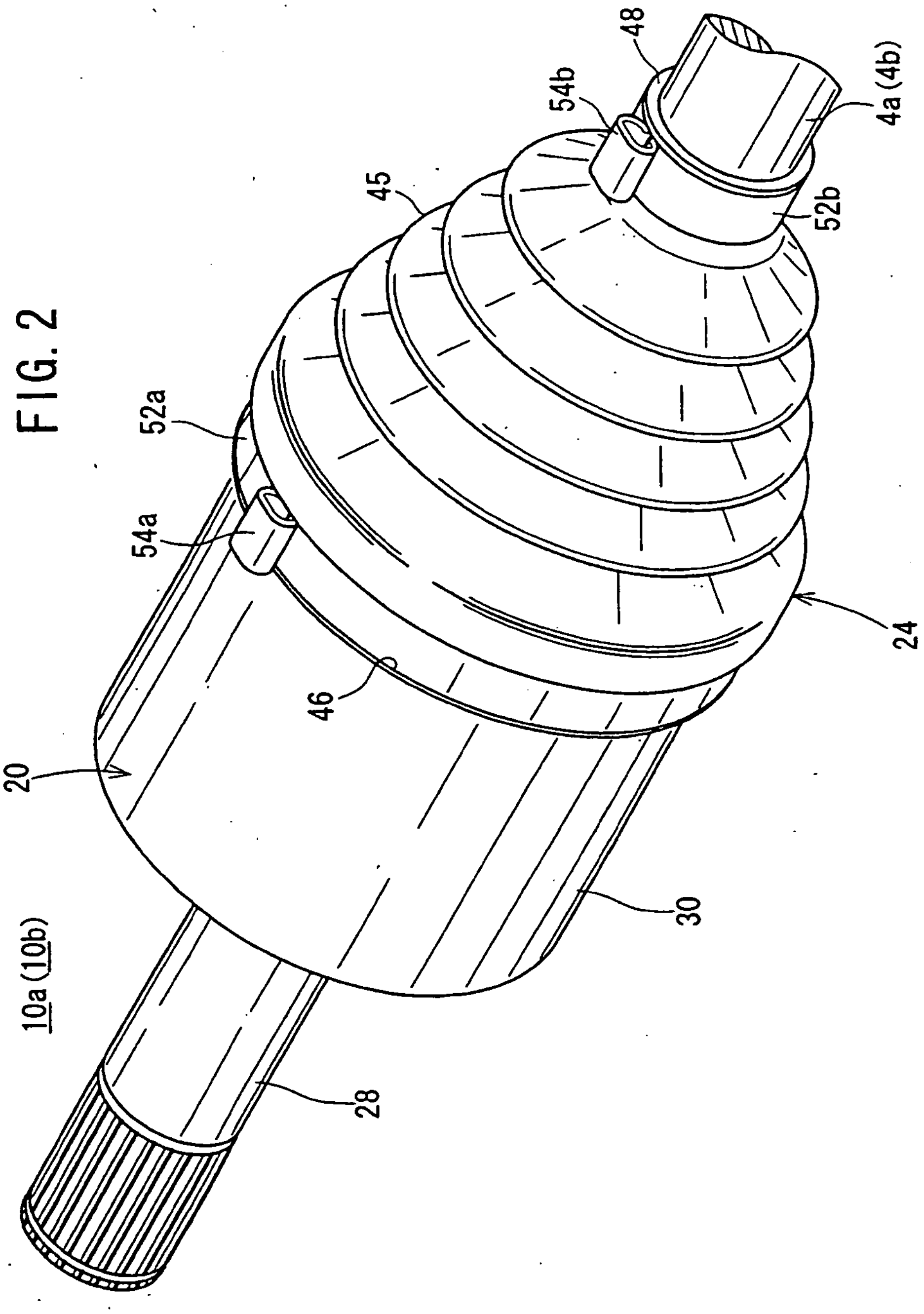

FIG. 3

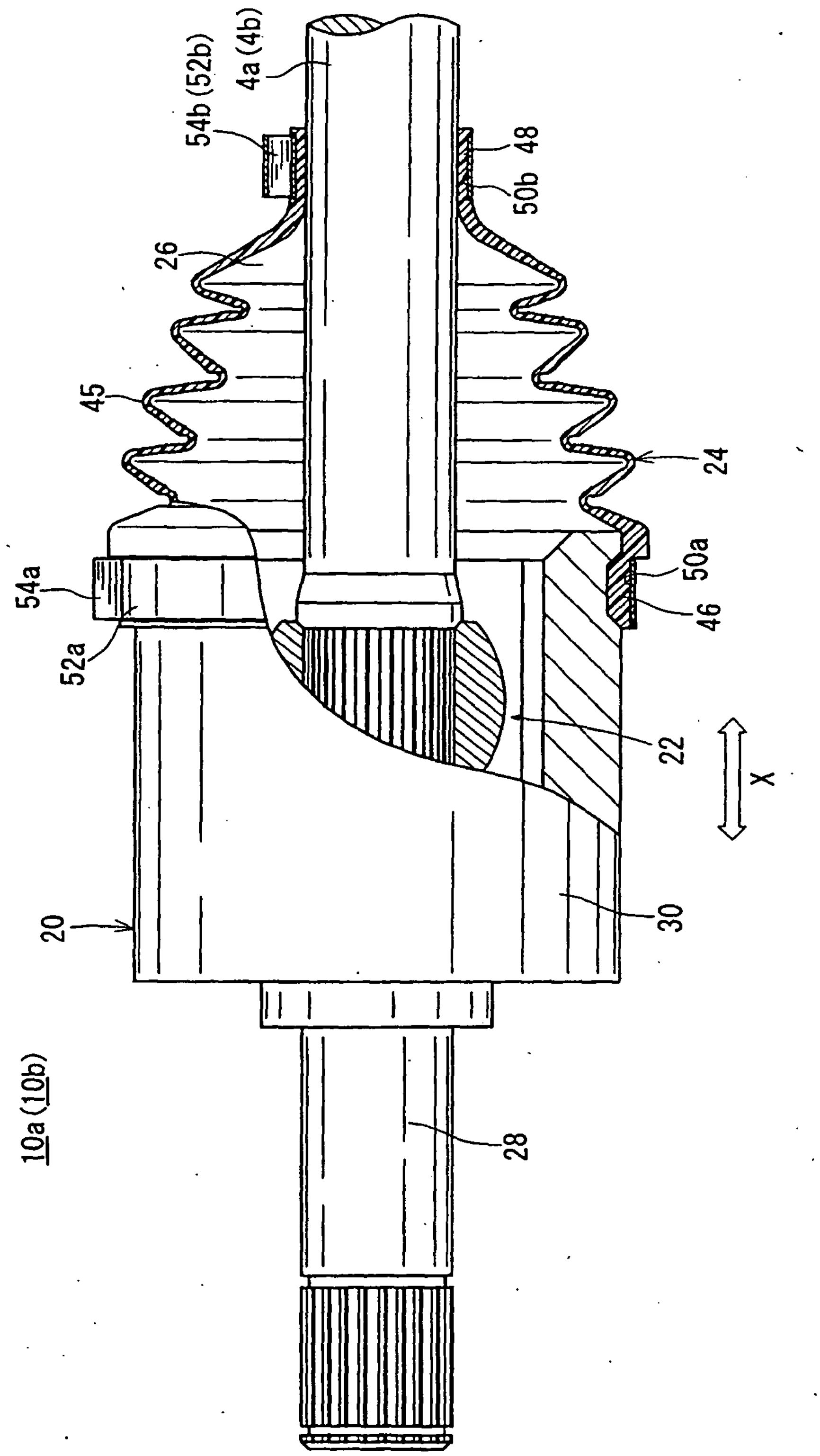

FIG. 4

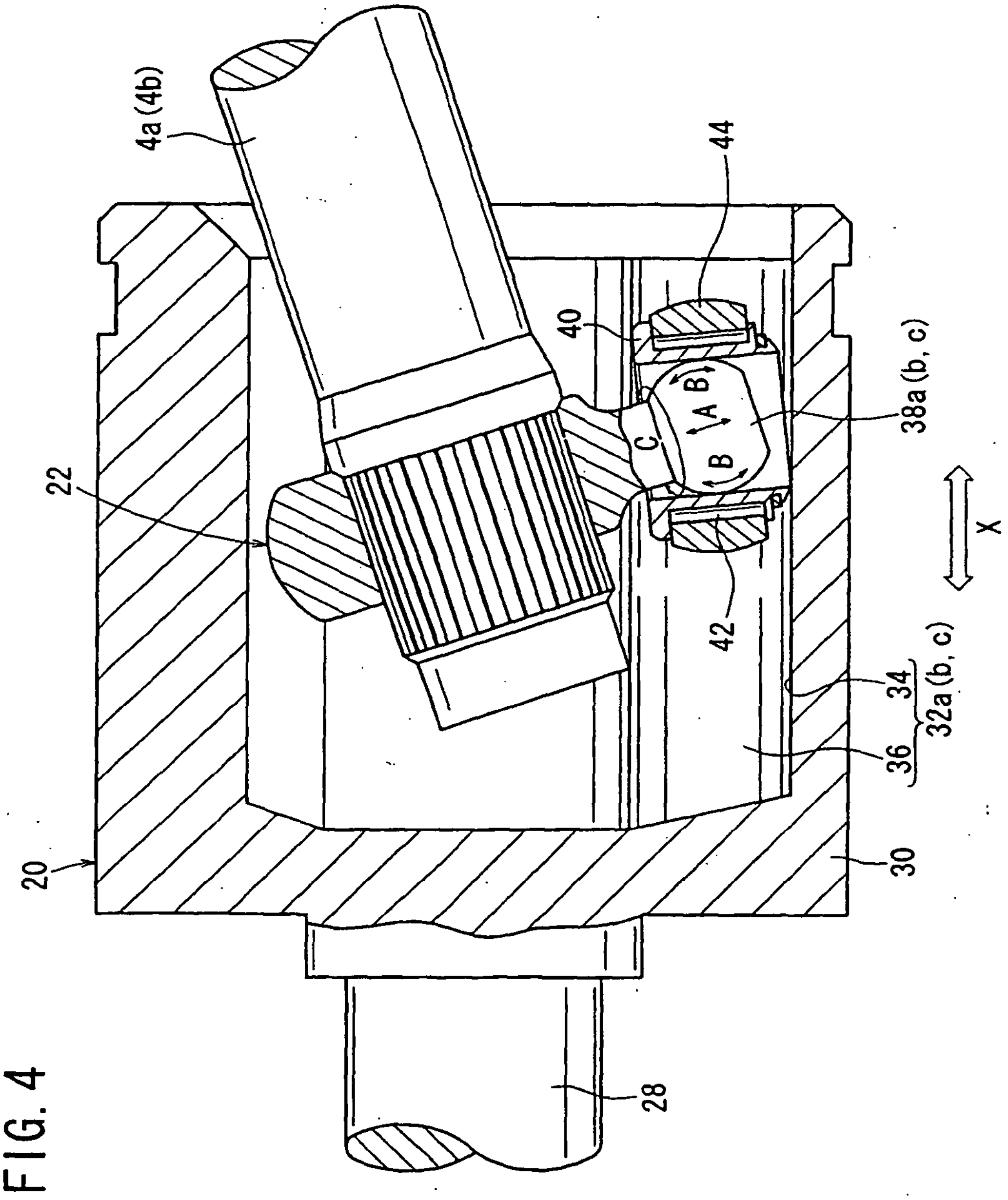

FIG. 5

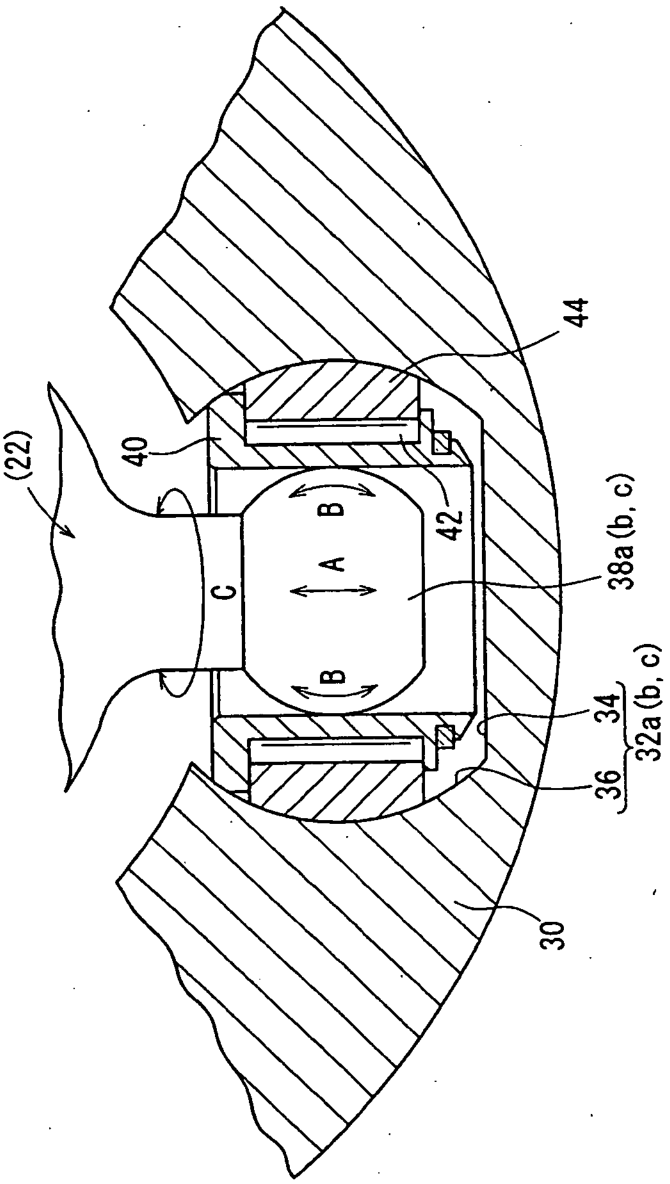

FIG. 6

| | | EXAMPLE | | | |
|---|---|---|---|---|---|
| | | 1 | 2 | 3 | 4 |
| LUBRICANT BASE OIL [% BY MASS] | SOLVENT REFINING PARAFFINIC MINERAL OIL[1] | 79 | 87 | 86 | - |
| | POLY-$\alpha$-OLEFIN[2] | - | - | - | 86 |
| UREA AMOUNT [% BY MASS] | | 14 | 8 | 8 | 8 |
| UREA RAW MATERIAL [MOLE RATIO] | DIPHENYLMETHANE-4,4'-DIISOCYANATE | 1 | 5 | 5 | 5 |
| | CYCLOHEXYLAMINE | 2 | 8 | 8 | 8 |
| | OCTADECYL ALCOHOL | - | 2 | 2 | 2 |
| SODIUM BORATE HYDRATE [% BY MASS] | | 3 | - | - | - |
| POTASSIUM BORATE HYDRATE [% BY MASS] | | - | 2 | 2 | 2 |
| SOLID ~~OIL-INSOLUBLE~~ MOLYBDENUM DITHIOCARBAMATE[3] [% BY MASS] | | 3 | 2 | 2 | 2 |
| OIL-SOLUBLE MOLYBDENUM DITHIOCARBAMATE[4] [% BY MASS] | | - | - | - | - |
| DIHYDROCARBYL POLYSULFITE[5] [% BY MASS] | | - | - | - | - |
| EXTREME PRESSURE AGENT[6] [% BY MASS] | | - | - | 1 | 1 |
| ANTIOXIDANT[7] [% BY MASS] | | 1 | 1 | 1 | 1 |
| LIQUID COMPONENT [% BY MASS] | | 83 | 90 | 90 | 90 |
| SOLID COMPONENT [% BY MASS] | | 17 | 10 | 10 | 10 |
| SULFUR CONCENTRATION BASED ON LIQUID COMPONENT [% BY MASS] | | 0.52 | 0.53 | 0.53 | 0 |
| UREA IN SOLID COMPONENT [% BY MASS] | | 82 | 80 | 80 | 80 |
| OIL-INSOLUBLE MOLYBDENUM DITHIOCARBAMATE IN SOLID COMPONENT [% BY MASS] | | 18 | 20 | 20 | 20 |
| A-(S×B)/C | | 0 | 0 | 0 | 0 |
| FRICTIONAL COEFFICIENT | | 0.06 | 0.065 | 0.065 | 0.065 |
| DURABILITY BENCH TEST | | ○ | ○ | ○ | ○ |
| HIGH TEMPERATURE DURABILITY TEST FOR BOOT | TPC[8] BOOT | ○ | ○ | ○ | ○ |
| | CM[9] BOOT | △ | △ | △ | △ |
| | CR[10] BOOT | × | × | × | × |

1) KINEMATIC VISCOSITY 16 $mm^2/s$ (100 °C), SULFUR CONTENT RATIO: 0.55 % BY MASS
2) KINEMATIC VISCOSITY 16 $mm^2/s$ (100 °C), SULFUR CONTENT RATIO: 0 % BY MASS
3) MOLYBDENUM CONTENT RATIO: 30 % BY MASS
4) MOLYBDENUM CONTENT RATIO: 10 % BY MASS, SULFUR CONTENT RATIO: 11 % BY MASS
5) SULFUR CONTENT RATIO: 45 % BY MASS
6) TRICREDYL PHOSPHATE
7) PHENYL-$\alpha$-NAPHTHYLAMINE
8) POLYESTER-POLYETHER TYPE POLYESTER ELASTOMER (DUROMETER HARDNESS D42)
9) POLYETHYLENE CHLORIDE RUBBER (DUROMETER HARDNESS A47)
10) CHLOROPRENE RUBBER (DUROMETER HARDNESS A42)

FIG. 7

| | | COMPARATIVE EXAMPLE 1 | 2 | 3 | 4 | 5 | 6 |
|---|---|---|---|---|---|---|---|
| LUBRICANT BASE OIL [% BY MASS] | SOLVENT REFINING PARAFFINIC MINERAL OIL[1)] | 89 | 89 | 87 | 86 | - | 83 |
| | POLY-α-OLEFIN[2)] | - | - | - | - | 86 | - |
| THICKENER AMOUNT [% BY MASS] | | 8 | 8 | 8 | 8 | 8 | 10 |
| THICKENER RAW MATERIAL [MOLE RATIO] | DIPHENYLMETHANE-4,4'-DIISOCYANATE | 5 | 5 | 5 | 5 | 5 | * |
| | CYCLOHEXYLAMINE | 8 | 8 | 8 | 8 | 8 | |
| | OCTADECYL ALCOHOL | 2 | 2 | 2 | 2 | 2 | |
| SODIUM BORATE HYDRATE [% BY MASS] | | - | - | - | - | - | 3 |
| POTASSIUM BORATE HYDRATE [% BY MASS] | | - | 2 | 2 | 2 | 2 | - |
| SOLID ~~OIL-INSOLUBLE~~ MOLYBDENUM DITHIOCARBAMATE[3)] [% BY MASS] | | 2 | - | - | 2 | 2 | 3 |
| OIL-SOLUBLE MOLYBDENUM DITHIOCARBAMATE[4)] [% BY MASS] | | - | - | 2 | - | - | - |
| DIHYDROCARBYL POLYSULFITE[5)] [% BY MASS] | | - | - | - | 1 | 1 | - |
| EXTREME PRESSURE AGENT[6)] [% BY MASS] | | - | - | - | - | - | - |
| ANTIOXIDANT[7)] [% BY MASS] | | 1 | 1 | 1 | 1 | 1 | 1 |
| LIQUID COMPONENT [% BY MASS] | | 90 | 92 | 92 | 90 | 90 | 87 |
| SOLID COMPONENT [% BY MASS] | | 10 | 8 | 8 | 10 | 10 | 13 |
| SULFUR CONCENTRATION BASED ON LIQUID COMPONENT [% BY MASS] | | 0.54 | 0.53 | 0.76 | 1.03 | 0.50 | 0.52 |
| UREA IN SOLID COMPONENT [% BY MASS] | | 80 | 100 | 100 | 80 | 80 | 0 |
| OIL-INSOLUBLE MOLYBDENUM DITHIOCARBAMATE IN SOLID COMPONENT [% BY MASS] | | 20 | 0 | 0 | 20 | 20 | 23 |
| A-(S×B)/C | | 0 | 0 | 0.24 | 0.50 | 0.50 | 0 |
| FRICTIONAL COEFFICIENT | | 0.06 | 0.10 | 0.055 | 0.07 | 0.07 | 0.06 |
| DURABILITY BENCH TEST | | × | × | ○ | ○ | ○ | × |
| HIGH TEMPERATURE DURABILITY TEST FOR BOOT | TPC[8)] BOOT | ○ | ○ | × | × | × | ○ |
| | CM[9)] BOOT | △ | △ | × | × | × | △ |
| | CR[10)] BOOT | × | × | × | × | × | × |

1) KINEMATIC VISCOSITY 16 $mm^2/s$ (100 °C), SULFUR CONTENT RATIO: 0.55 % BY MASS
2) KINEMATIC VISCOSITY 16 $mm^2/s$ (100 °C), SULFUR CONTENT RATIO: 0 % BY MASS
3) MOLYBDENUM CONTENT RATIO: 30 % BY MASS
4) MOLYBDENUM CONTENT RATIO: 10 % BY MASS, SULFUR CONTENT RATIO: 11 % BY MASS
5) SULFUR CONTENT RATIO: 45 % BY MASS
6) TRICREDYL PHOSPHATE
7) PHENYL-α-NAPHTHYLAMINE
8) POLYESTER-POLYETHER TYPE POLYESTER ELASTOMER (DUROMETER HARDNESS D42)
9) POLYETHYLENE CHLORIDE RUBBER (DUROMETER HARDNESS A47)
10) CHLOROPRENE RUBBER (DUROMETER HARDNESS A42)
*) 12 HYDROXYSTEARIC ACID LITHIUM SALT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4304300 A
- JP 6184583 A
- US 3313727 A
- US 3929650 A
- US 4089790 A